# EUROPEAN PATENT SPECIFICATION

(11) **EP 2 098 751 B1**
(45) Date of publication and mention of the grant of the patent: **02.05.2012**
(21) Application number: 06843342.4
(22) Date of filing: 26.12.2006
(51) Int. Cl.: F16H 1/46, B04B 9/08

(54) **GEAR BOX FOR CENTRIFUGAL SEPARATOR**
GETRIEBE FÜR EINEN ZENTRIFUGALABSCHEIDER
BOÎTE D'ENGRENAGES POUR UN SÉPARATEUR CENTRIFUGE

(43) Date of publication of application: 09.09.2009
(73) Proprietor: TOMOE Engineering Co., Ltd., Shinagawa-ku, Tokyo 141-0032 (JP); NSK Ltd., Tokyo 141-8560 (JP)
(72) Inventor: OHASHI, Jun c/o TOMOE ENGINEERING CO. LTD., Tokyo 141-0032 (JP); ENDOH, Kouichi c/o TOMOE ENGINEERING CO. LTD., Tokyo 141-0032 (JP)
(74) Representative: Jones, Ithel Rhys
(86) International application number: PCT/JP2006/325958
(87) International publication number: WO 2008/078396

(56) References cited:
- EP-A1- 0 711 608
- WO-A1-02/081094
- DE-U1- 9 409 109
- JP-A- 05 502 928
- JP-A- 11 207 211
- JP-A- 2003 336 642
- JP-A- 2006 220 295
- JP-A- 2006 250 324
- US-A- 5 590 225
- US-A- 5 816 713
- US-A1- 2004 234 184

## Description

### TECHNICAL FIELD

The present invention relates to a gearbox for a decanter type centrifugal separator.

### BACKGROUND ART

In a decanter type centrifugal separator, a bowl and a screw conveyer disposed coaxially in the bowl are rotated at different speeds through a gearbox. In the bowl, sedimented solids are centrifugally separated from liquids (separated liquids), and the solids are continuously reduced in contained liquids and discharged from the separator by utilizing the difference in rotation speed between the bowl and the screw conveyer. Such a centrifugal separator is often used in centrifugal dewatering applications for drainage and sewage sludge.

In the gearbox for this decanter type centrifugal separator, the screw conveyer is rotated by a driving force of a main motor (main electric motor) that rotationally drives the bowl, affected by driving force of a back drive motor (differential motor). In this manner, to control the treatment of the supplied sludge and the amount of liquids remaining in the sedimented solids, a desired difference in rotation speed (differential rotation speed) can be generated between the rotationally driven bowl and screw conveyer. In a general decanter type centrifugal separator, the bowl and the screw conveyer are differentially rotated in the same direction such that the rotation speed of the screw conveyer is slightly less than the rotation speed of the bowl.

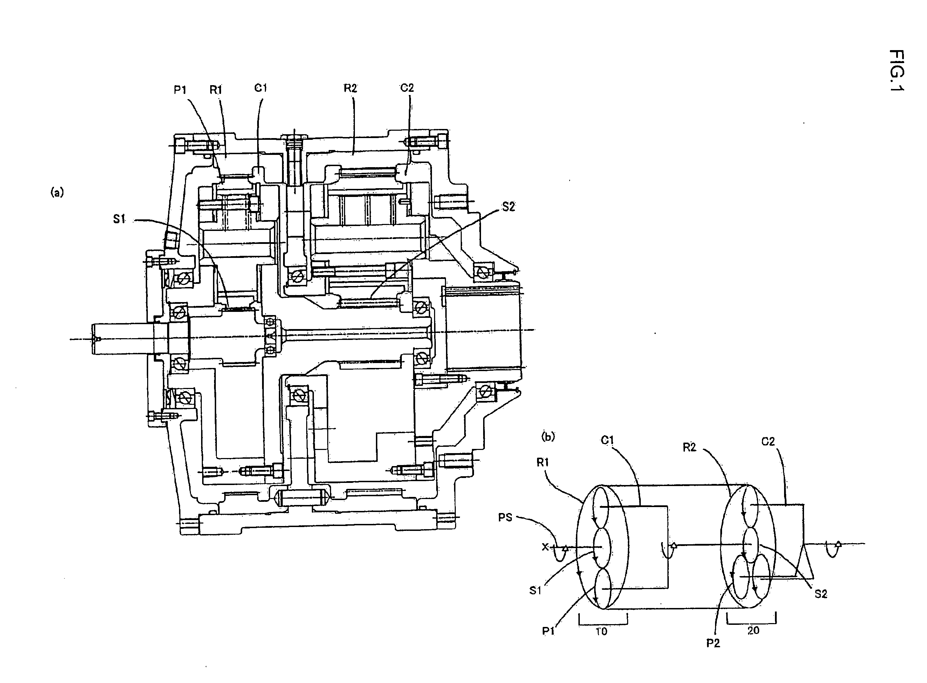

Fig. 1 shows a conventional two-stage gearbox. This two-stage gearbox comprises: a ring gear that is rotated by the driving force of a main motor, i.e., rotated at the same rotation speed as that of a bowl; a first gear unit 10 that includes a sun gear and planetary gears disposed in the ring gear; and a second gear unit 20. The sun gear S1 of the first gear unit 10 is connected to a pinion shaft PS of a back drive motor. A sun gear S2 of the second gear unit 20 is connected to a carrier C1 that rotates together with planetary gears P1 of the first gear unit that revolve around the sun gear S1, and planetary gears P2 of the second gear unit 20 are connected to a screw conveyer 3 through a carrier C2.

Therefore, as the ring gear R1 rotates at a fast speed, which is the same as the rotation speed of the bowl, each of the planetary gears P1 of the first gear unit 10 rotates at a slow speed and revolves at a fast speed to rotate the carrier C1. In this two-stage gearbox, the revolution of the planetary gears P1 is controlled by the rotation of the sun gear S1 connected to the back drive motor, whereby the differential rotation between the bowl and the screw conveyer is achieved.

However, in the above two-stage gearbox, the revolution of the planetary gears P1 is directly transmitted to rotationally drive the screw conveyer (the sun gear S2), and the revolution of the planetary gears P1, i.e., the rotation of the planetary gears P1, is controlled by the sun gear S1 connected to the back drive motor. Therefore, to reduce the differential speed between the bowl and the screw conveyer (for example, to about 1 rpm), the back drive motor must rotate the sun gear S1 at a fast speed. Accordingly, in the above two-stage gearbox, a high-power back drive motor must be used. Disadvantageously, this results in an increase in power consumption and in operational cost.

Moreover, with the above two-stage gearbox, a load corresponding to the load on the back drive motor is additionally applied to the main motor. More specifically, in the two-stage gearbox, the screw conveyer is rotated by a driving force of a main motor that rotationally drives the bowl, affected by a driving force of a back drive motor. Therefore, the power of the main motor must be controlled with consideration given to the additional load, i.e., the driving force of the back drive motor, so that the additional driving force corresponding to the driving force of the back drive motor is added to the driving force of the main motor. Accordingly, the output power of the main motor must be increased in response to the driving force of the high-power back drive motor. This results in an increase in the set-up overall power.

To solve the problems in the above two-stage gearbox, a gearbox 1 including a speed-change carrier C1 was proposed in WO 91/10846. As shown in Fig.2B, a first-a gear unit 10a is added to the conventional two-stage gearbox so as to be disposed between the first gear unit 10 and the second gear unit 20. In this gearbox 1, the revolution of the planetary gears P1 of the gear unit 10 is not directly transmitted to rotationally drive the screw conveyor, and the driven rotation of a ring gear R1a of the gear unit 10a is transmitted to the sun gear S2 of the gear unit 20.

More specifically, the sun gear S1 of the first gear unit 10 does not rotate. A sun gear S1a of the first-a gear unit 10a is connected to the pinion shaft PS of the back drive motor, and planetary gears P1a engaged with the sun gear S1a are connected to the planetary gears P1 of the gear unit 10 through the speed-change carrier C1. Therefore, the planetary gears P1a of the gear unit 10a revolve together with the revolution of the planetary gears P1 of the gear unit 10 (the rotation of the ring gear R1 by the main motor), and the revolution of the planetary gears P1a causes the ring gear R1a to rotate. The rotation ring gear R1a is transmitted to the sun gear S2 of the gear unit 20, whereby the screw conveyor is rotationally driven.

In the above case, the planetary gears P1 and P1a, which rotate the ring gear R1a, rotate at a fast speed and also revolve at a fast speed. More specifically, in the previously described two-stage gearbox, the ring gear R1 of the first gear unit 10 is driven by the main motor to rotate at a fast speed, and the planetary gears P1 rotate at a fast speed and also revolve at a fast speed. However, in the gearbox 1 including the speed-change carrier C1, the planetary gears P1a of the first-a gear unit 10a revolve at a fast speed together with the revolution of the planetary gears P1 of the first gear unit. These planetary gears P1a rotate the ring gear R1a, and the planetary gears P1 and P1a are rotated at a fast speed. Therefore, the revolution of the planetary gears P1 can be controlled by rotating at a slow speed the sun gear S1a connected to the back drive motor, whereby an increase in the operational cost can be avoided.

Generic document WO 021081094 discloses a gearbox for a centrifuge, such as a decanter centrifuge with a rotatable bowl connected to a housing of the gearbox. The gearbox is driven at a first speed by a first external driving means and a helical conveyer coaxially arranged for rotating therein at a second rotational speed. The gearbox comprises a three-stage epicycloidal gear train. The relative speed difference between the bowl and the conveyer is achieved with small internal and external losses and by reversing the direction of the conveyer sun wheel the bowl can be brought to run faster or slower than the conveyer.

JP 2006 250324, US 5 816 713, US 5 590 225 and DE 94 09 109 disclose bearing cages/holders, but do not deal with the problems discussed above.

### DISCLOSURE OF THE INVENTION

### PROBLEMS TO BE SOLVED BY THE INVENTION

Roller bearings designed with consideration given to a radial load (a load in a direction perpendicular to the axial direction) are used as bearings B1 and B1a of the planetary gears rotated at a fast speed. Normally, when a bearing having a rotational center located on a rotational radius rotates at a fast speed and revolves at a fast speed, a revolution centrifugal force due to the self weight of the bearing is generated. In such a case, the friction with an outer ring flange and an inner ring flange increases due to the centrifugal force. Therefore, the oil film is not well formed, and, disadvantageously, the lubrication may be lost. However, in apparatuses operated intermittently, such a problem is less likely to occur.

However, the decanter type centrifugal separator described above is normally operated continuously for 24 hours a day, 365 days a year. The above gearbox 1 comprising the speed-change carrier C1 includes the planetary gears P1 and P1a that rotate continuously at a fast speed for a long time. Therefore, a load is continuously applied for a long time to the bearings B1 and B1a used in the planetary gears P1 and P1a, so that the above problem is much more likely to occur in these bearings.

In other words, the maintenance of the gearbox must be carried out frequently, so that the operational cost increases. In addition, since an excessive load may be applied to the bearings during the continuous operation, the reliability is low. Therefore, at present, the proposed gearbox 1. including the speed-change carrier C1 is not preferably used in practical applications.

The present invention has been made in view of the above problems. The present invention solves the problems in the bearings of a gearbox for a decanter type centrifugal separator that includes a speed-change carrier, and provides a gearbox for a decanter type centrifugal separator which provides a preferable differential rotation between a bowl and a screw conveyer.

### MEANS FOR SOLVING THE PROBLEMS

To achieve the above object, a gearbox for a decanter type centrifugal separator of the present invention is characterized by the following features. The gearbox comprises: a first gear unit including a first ring gear that is rotated by a driving force of first driving means rotationally driving a bowl, a non-rotating first sun gear, and a first planetary gear that engages with the first ring gear and with the non-rotating first sun gear; a second gear unit including a second ring gear that is rotated by the driving force of the first driving means, a second sun gear that rotates in response to revolution of the first planetary gear and a second planetary gear that engages with the second ring gear and with the second sun gear, revolution of the second planetary gear being transmitted to a screw conveyor; a first-a gear unit including a first-a sun gear connected to second driving means, a first-a planetary gear that engages with the first-a sun gear and revolves around the first-a sun gear together with the revolution of the first planetary gear, and a first-a ring gear that rotates in response to the revolution of the first-a planetary gear and is connected to the second sun gear, the revolution of the first planetary gear being transmitted to the second sun gear through the first-a ring gear; and a speed-change carrier that supports the coupled revolution of the first planetary gear and the first-a planetary gear, wherein each of the first planetary gear and the first-a planetary gear includes a cylindrical roller bearing that allows rotation thereof, the cylindrical roller bearing including an inner ring, an outer ring coaxially combined with the inner ring, a plurality of cylindrical rollers disposed between the inner ring and the outer ring, and a roller-guided cage made of a heat-resistant resin. The gearbox provides for a different rotational speed of 1.0 rpm or less between the rotational bowl and the screw conveyor and the gearbox provides for a centrifugal force of 2500 G or more acting on bearings of the first planetary gear and the first-a planetary gear. The heat-resistant resin that forms the roller-guided cage comprises L-PPS (linear polyphenylene sulfide) or PEEK (polyether ether ketone) that holds the cylindrical rollers at regular intervals in the circumferential direction.

### EFFECTS OF THE INVENTION

In the present invention, roller-guided cages made of a heat-resistant resin are used as the cages of the roller bearings that allow the rotation of the first planetary gear the first-a planetary gear. In this manner, seizing caused by loss of lubrication of the bearings can be prevented. Therefore, the bowl and the screw conveyor can be rotated at different speeds in a preferred and reliable manner.

### BRIEF DESCRIPTION OF THE DRAWINGS

Figs. 1(a) and 1(b) show a conventional two-stage gearbox for a decanter type centrifugal separator, Fig 1(a) being an axial cross-sectional view of the two-stage gearbox, Fig. 1(b) being a schematic view of the gear units of the two-stage gearbox.
Fig. 2A is an axial cross-sectional view illustrating a gearbox for a decanter type centrifugal separator which includes a speed-change carrier.
Fig. 2B is a schematic view of the gear units of the gearbox for the decanter type centrifugal separator which includes the speed-change carrier.
Fig. 3 is a schematic view of a decanter type centrifugal separator to which a gearbox of an embodiment is applied.

### DESCRIPTION OF REFERENCE NUMERALS

- 1: gearbox including speed-change carrier
- 2: bowl
- 3: screw conveyer
- MM: main motor (first driving means)
- BDM: back drive motor (second driving means)
- H: housing
- 10: first gear unit
- S1: first sun gear
- P1: first planetary gear
- R1: first ring gear
- C1: speed-change carrier C1
- B1: first planetary gear bearing
- 10a: first-a gear unit
- S1a: first-a sun gear
- P1a: first-a planetary gear
- R1a: first-a ring gear
- Cla: carrier Cla
- B1a: first-a planetary gear bearing
- 20: second gear unit
- S2: second sun gear
- P2: second planetary gear
- R2: second ring gear
- C2: carrier C2
- PS: pinion shaft

### BEST MODE FOR CARRYING OUT THE INVENTION

Hereinafter, a preferred embodiment of the present invention will be described. However, the present invention is not limited to the exemplary embodiment.

In the present embodiment, a gearbox for a decanter type centrifugal separator includes a speed-change carrier, as described above. In this gearbox, the planetary gears rotate at a fast speed and also revolve at a fast speed, and a roller-guided cage made of a heat-resistant resin is used as the cage of the bearing of each planetary gear. In this manner, in a high-speed decanter type centrifugal separator which can generate large centrifugal force, preferable differential rotation between the bowl and screw conveyer can be obtained continuously for a long time.

First, a description will be given of a decanter type centrifugal separator to which the gearbox of the present embodiment is applied.

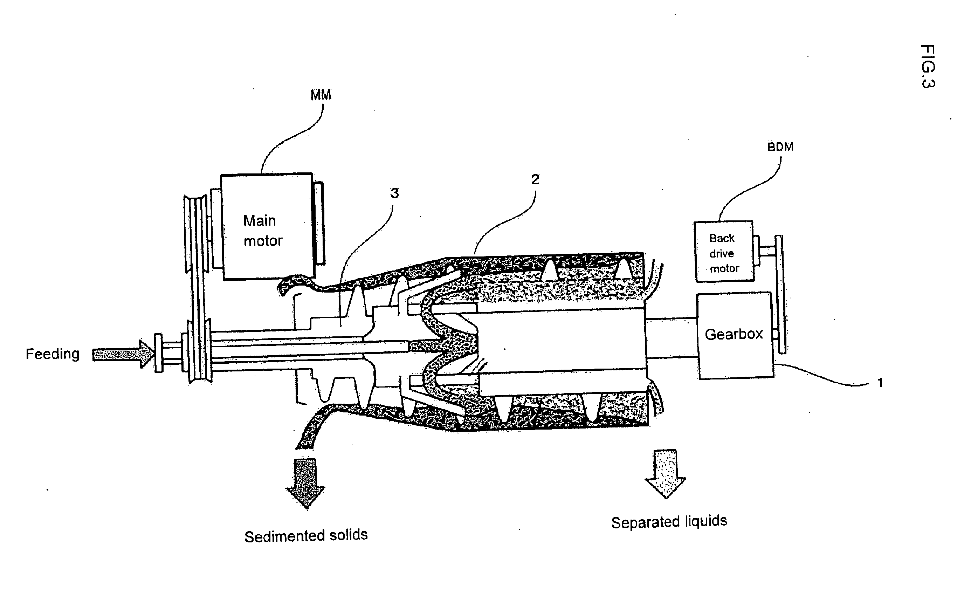

As shown in Fig. 3, the decanter type centrifugal separator includes: a bowl 2; a screw conveyer 3 disposed coaxially in the bowl 2; a main electric motor MM (first driving means) for rotationally driving the bowl 2 and the screw conveyor 3; a back drive motor BDM (second driving means) serving as a differential motor used to generate a difference in rotation speed between the bowl 2 and the screw conveyor 3; and a gearbox 1.

In the centrifugal separator, the difference in rotation speed between the bowl 2 and the screw conveyer 3 is utilized to centrifuge a target material such as sludge fed in the bowl 2, and the sedimented solids centrifugally separated from liquids and containing a reduced amount of liquids are continuously discharged. The amount of liquids remaining in the separated sedimented solids is controlled by generating a difference in rotation speed between the bowl 2 and the screw conveyor 3 using the back drive motor BDM and the gearbox 1. In particular, the centrifugal separator is often using with the difference in rotation speed set to 1.0 rpm or less or about 3.0 rpm, for the purpose of obtaining high dewatering ratio (generally, the water content is about 80% or less).

Next, a description will be given of the gearbox 1 including a speed-change carrier C1 used in the present embodiment.

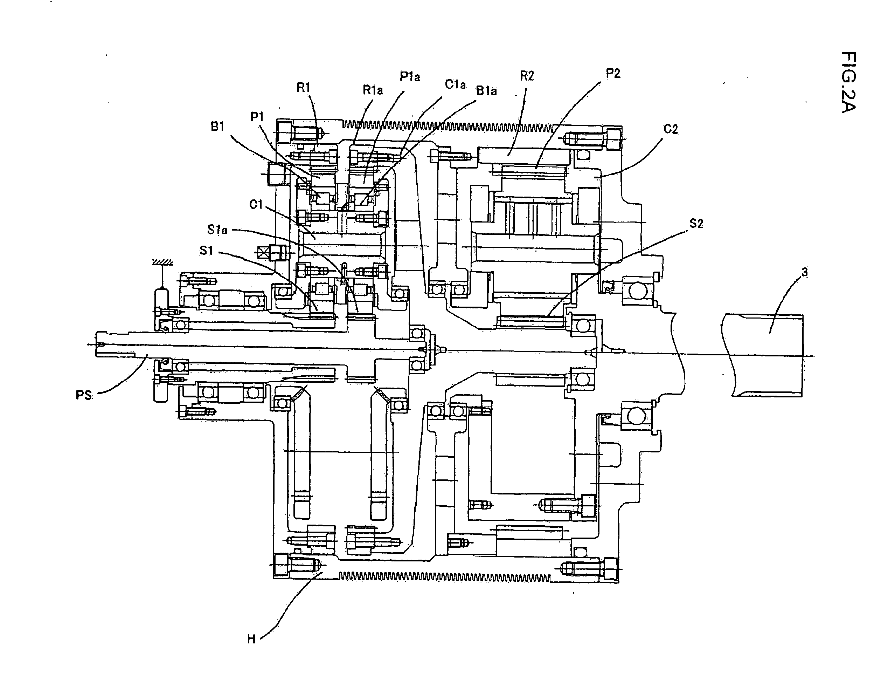

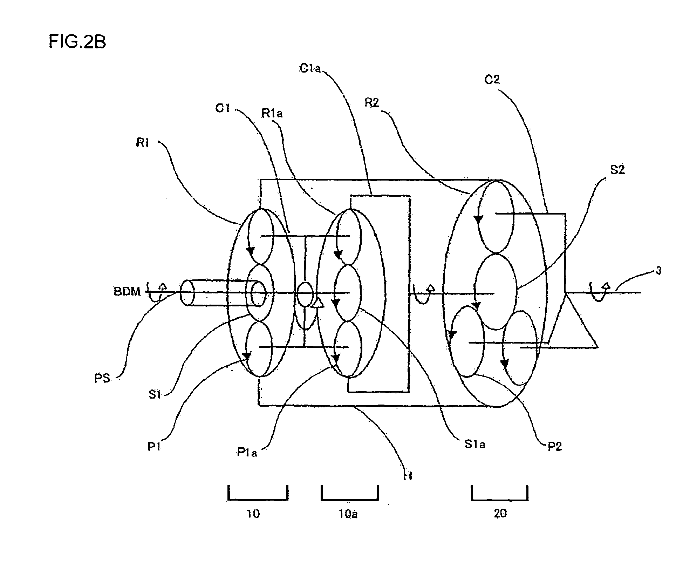

As shown in Figs. 2A and 2B, gearbox 1 which includes the speed-change carrier C1 and to which the present invention is applied comprises a housing H that rotates at the same speed as the rotation speed of the bowl 2 by transmitting the driving force of the main motor MM of the decanter type centrifugal separator through the bowl 2 and further comprises, disposed in the housing H; a first gear unit 10; a first-a gear unit 10a; and a second gear unit 20. The gear unit 10a is disposed between the gear unit 10 and the gear unit 20.

The driving force from the first gear unit is transmitted to the first-a gear unit through the speed-change carrier C1 and is then transmitted to the second gear unit through a carrier C1a. A carrier C2 is connected to the second gear unit 20, and the second gear unit 20 drives the screw conveyer 3 through the carrier C2. The driving force of the back drive motor BDM is transmitted to the first-a gear unit 10a through a pinion shaft PS.

A more detailed description will now be given of the gear units contained in the gearbox 1 of the present embodiment . The first gear unit 10 includes: a ring gear R1 that is connected to the housing H and rotated by the driving force of the main motor MM rotationally driving the bowl 2; a non-rotating sun gear S1; and planetary gears P1 each of which is rotatably supported by the speed-change carrier C1 through a planetary gear bearing gear B1 and engages with the ring gear R1 and the sun gear S1. In the present embodiment, two planetary gears P1 are disposed at 180° intervals.

The first-a gear unit 10a includes: a sun gear S1a connected to the pinion shaft PS; two planetary gears P1a each of which is rotatably supported by the speed-change carrier C1 through a planetary gear bearing B1a and revolves around the sun gear S1 a together with the revolution of the planetary gears P1, and a ring gear R1 a that rotates in response to the revolution of the planetary gears P1 a and is connected to a sun gear S2 described later through the carrier C1a.

The second gear unit 20 includes: a ring gear R2 that is connected to the housing H and is rotated by the driving force of the main motor MM rotationally driving the bowl 2; the sun gear S2 that rotates in response to the revolution of the planetary gears P1 of the gear unit 10; and three planetary gears P2 which are disposed 120° intervals and each of which is rotatably supported by the carrier C2 through a sleeve bearing and engages with the ring gear R2 and with the sun gear S2. The carrier C2 is rotated by the revolution of the planetary gears P2, and the rotation of the carrier C2 is transmitted to the screw conveyer 3.

In the present embodiment, each of the first gear unit and the first-a gear unit includes two planetary gears, and the second gear unit includes three planetary gears. However, the present invention is not limited to this embodiment. Any number of planetary gears disposed at regular intervals may be used.

The bearings B1 and B1a connected to the planetary gears P1 of the first gear unit 10 and the planetary gears P1a of the first-a gear unit are cylindrical roller bearings. In such cylindrical roller bearings, the cylindrical rollers are in line contact with the raceway, so that their radial load capacity is large.

Next, a more detailed description will be given of the bearings B1 and B1a used in the planetary gears P1 of the first gear unit 10 and the planetary gears P1a of the first-a gearbox 10a.

In the present embodiment, each of the bearings of the planetary gears P1 and P1a of the gearbox 1 is a cylindrical roller bearing including a roller-guided cage. The roller-guided cage is made of a heat-resistant resin.

Each of the bearings B1 and B1a includes: an inner ring; an outer ring coaxially combined with the inner ring; a plurality of cylindrical rollers disposed between the inner ring and the outer ring; and a roller-guided cage that holds the cylindrical rollers at regular intervals in the circumferential direction.

The roller-guided cage is made of a heat-resistant resin and is preferably made of L-PPS (Linear-PolyPhenylene Sulfide) or PEEK (Polyether ether ketone).

Table 1 shows the properties of an L-PPS-made roller-guided cage of a bearing used in the present embodiment and the properties of a conventional outer ring-guided cage made of a copper alloy.

**[Table 1]**

| Material | Young's modulus | Poisson ratio | Specific gravity Kgf/m^3 |
|---|---|---|---|
| Cage according to the present embodiment (roller-guided cage made of L-PPS) | 8840 | 0.37 | 1470 |
| Conventional cage (outer ring-guided cage made of copper alloy) | 103000 | 0.35 | 8500 |

Table 2 shows the maximum principal stress load of each of the above cages as measured when a decanter type centrifugal separator having an inner diameter φ of 425 is operated at a rotation speed of 3241.4 rpm to generate a centrifugal force of 2500 G.

**[Table 2]**

| Maximum principal stress load (unit: MPa) | |
|---|---|
| Cage according to the present embodiment | 56.1 |
| Conventional cage | 91.6 |

L-PPS has good heat resistance and can be continuously used at 200°C or higher. In addition, the specific gravity of the L-PPS-made cage is much less than that of the conventional cage made of a metal such as a copper alloy, as shown in Table 1. Similar advantages may be obtained when PEEK is used.

Moreover, as shown in Table 2, the maximum principal stress load on the cage used in the present embodiment as measured under the above conditions is about 60% that of the conventional cage. As described above, the maximum principal stress load on the cages is small. In addition, since the specific gravity of the cages of the bearings is small, the centrifugal force due to their own weight is small even when the planetary gears P1 and P1a rotate at a fast speed. Therefore, guiding gaps for the rollers can be ensured, so that the occurrence of seizing is expected to be prevented.

As described above, the conventional cage is an outer ring-guided cage. Therefore, when the planetary gear rotates at a fast speed and revolves at a fast speed, the cage comes into contact with the inner surface of the outer ring in a range of an angle of about 180° due to the deformation of the cage. Therefore, guiding gaps can not been ensured. However, as described above, the cage used in the present embodiment is a roller-guided cage. Therefore, even when the planetary gear rotates at a fast speed and revolves at a fast speed, the guiding gaps are maintained although the rollers come in contact with end portions of the guiding surfaces of the pockets.

If the guiding gaps are not maintained over a wide area, the oil film on the guiding surfaces is not formed again after the lubrication is once lost. In other words, since the guiding gaps are ensured in the roller-guided cage, the oil film on the guiding surfaces is smoothly formed again even after the lubrication is once lost.

In the bearings used in the present embodiment, the roller-guided cage made of a heat-resistant resin is used. Therefore, even when the bearings rotate at a fast speed, the guiding gaps are ensured, so that the lubrication is prevented from being lost.

A description will now be given of the operation for generating a difference in rotation speed between the bowl 2 and the screw conveyer 3 through the use of the gearbox 1 of the present embodiment.

First, the back drive motor BDM is driven, and the rotation speed of the ring gear R1a of the first-a gear unit 10a is thereby changed. More specifically, the driving force of the back drive motor BDM is transmitted to the sun gear S1a through the pinion shaft PS, and the sun gear S1a thereby starts rotating, so that the revolution speeds of the planetary gears P1 and the planetary gears P1a are reduced. Accordingly, the rotation speed of the ring gear R1a is reduced, so that a difference in rotation speed between the sun gear S2 and the ring gear R2 is generated in the second gear unit 20. In such a case, the revolution speed of the planetary gears P2 revolving around the sun gear S2 is smaller than the rotation speed of the ring gear R2. Therefore, a difference in rotation speed is generated between the bowl 2 and the screw conveyer 3.

In the decanter type centrifugal separator to which the gearbox 1 of the present embodiment is applied, when a difference in rotation speed is generated between the bowl 2 and the screw conveyer 3, the load on the main motor MM and the load on the back drive motor BDM can be much smaller than those in the conventional two-stage gearbox.

This is specifically described by way of the following example. A decanter type centrifugal separator comprising the conventional two-stage gearbox is used and a decanter type centrifugal separator comprising the gearbox of the present embodiment were used. Each of these decanter type centrifugal separators was operated such that the rotation speed of the bowl 2 was 3000 rpm and the rotation speed of the screw conveyer 3 was 2999 rpm (the difference in speed is 1 rpm).

For example, the gear ratio of the conventional two-stage gearbox was set to 125:1. When the decanter type centrifugal separator was operated at the above rotation speeds, the rotation speed of the back drive motor BDM was 2845 rpm. In this case, the electric power consumed by, or the load applied to, the back drive motor BDM was 4.3 kw. As described above, not only the back drive motor, but also the main motor requires the same amount of electric power, i.e., 4.3 kw. Therefore, when the centrifugal separator is operated under the above conditions, an additional electric power of 8.6 kw, in addition to the electric power consumed by the main motor to rotate the bowl, is required in the centrifugal separator as a whole.

The gear ratio of the gearbox 1 of the present embodiment was set to 44:1. When the decanter type centrifugal separator was operated at the above rotation speeds, the rotation speed of the back drive motor BDM was 44 rpm, which is much smaller than that in the conventional two-stage gearbox. Therefore, the electric power consumed by the back drive motor BDM was 0.19 kw, and the additional electric power required by the centrifugal separator as a whole was 0.38 kw.

More specifically, in the above example, when the gearbox of the present embodiment was used, the electric power required to generate a difference in rotation speed of 1 rpm by rotating the bowl at 3000 rpm and rotating the screw conveyer at 2999 rpm could be reduced by 8.22 kw.

In the present embodiment, the gearbox 1 includes the speed-change carrier C1. As described above, when the driving force of the main motor MM or of the main motor MM and the back drive motor BDM is transmitted, the planetary gears P1 and P1a rotate at a fast speed and revolve at a fast speed to rotate the ring gear R1a. When the planetary gears P1 and P1a rotate at a fast speed and also revolve at a fast speed, the bearings B1 and B1a disposed therein are subj ected to centrifugal force caused by their own weight. In the conventional technology, the centrifugal force is large. Therefore, the lubrication of the bearings is more likely to be lost.

In the gearbox 1 including the speed-change carrier C1 in accordance with the present embodiment, the cages of the roller bearings B1 and B1a of the planetary gears P1 and P1a are made of a heat-resistant resin. Therefore, the specific gravity of the cage is smaller than that of the conventional cage, and the centrifugal force of the roller bearing due to its own weight can be reduced, so that the guiding gaps can be appropriately maintained. Moreover, since the cage is of the roller-guided type, the contact area between the rollers and the guiding surfaces can be reduced. In this manner, the guiding gaps can be ensured in a more preferred manner, and the lubrication can be preferably maintained. Therefore, the lubrication of the bearings can be prevented from being lost.

More specifically, even when the decanter type centrifugal separator using the gearbox 1 including the speed-change carrier C1 is operated continuously for a long time, the risk of seizing of the bearings in the gearbox can be reduced, and the differential rotation between the bowl and the screw conveyer can be preferably provided.

In particular, a high-speed decanter type centrifugal separator can be preferably obtained which can be practically used under the conditions in which a centrifugal force of 2500 G or more acts on the bearings.

## Claims

1. A gearbox (1) for a decanter type centrifugal separator including a rotational bowl (2) and a screw conveyer (3) disposed coaxially in the bowl (2), wherein the bowl (2) and the screw conveyer (3) are rotated at different speeds through the gearbox (1), the gearbox (1) comprising:
a first gear unit (10) including a first ring gear (R1) that is rotated by a driving force of first driving means (MM) rotationally driving a bowl (2), a non-rotating first sun gear (S1), and a first planetary gear (P1) that engages with the first ring gear (R1) and with the non-rotating first sun gear (S1);
a second gear unit (20) including a second ring gear (R2) that is rotated by the driving force of the first driving means (MM), a second sun gear (S2) that rotates in response to revolution of the first planetary gear (P1), and a second planetary gear (P2) that engages with the second ring gear (R2) and with the second sun gear (S2), revolution of the second planetary gear (P2) being transmitted to the screw conveyer (3);
a first-a gear unit including a first-a sun gear connected to second driving means (BDM), a first-a planetary gear (P1a) that engages with the first-a sun gear (S1a) and revolves around the first-a sun gear (S1a) together with the revolution of the first planetary gear (P1), and a first-a ring gear (R1a) that rotates in response to the revolution of the first-a planetary gear (P1a) and is connected to the second sun gear (S2), the revolution of the first planetary gear (P1) being transmitted to the second sun gear (S2) through the first-a ring gear (R1a); and
a speed-change carrier (C1) that supports the coupled revolution of the first planetary gear (P1) and the first-a planetary gear (P1a),
**characterized in that**
the gearbox (1) provides for a different rotational speed of 1.0 rpm or less between the rotational bowl (2) and the screw conveyer (3), and the gearbox (1) provides for a centrifugal force of 2500 G or more acting on bearings of the first planetary gear (P1) and the first-a planetary gear (P1a), and wherein
each of the first planetary gear (P1) and the first-a planetary gear (P1a) includes a cylindrical roller bearing that allows rotation thereof, the cylindrical roller bearing including an inner ring, an outer ring coaxially combined with the inner ring, a plurality of cylindrical rollers disposed between the inner ring and the outer ring, and a roller-guided cage made of a heat-resistant resin comprising L-PPS (linear polyphenylene sulfide) or PEEK (polyether ether ketone) that holds the cylindrical rollers at regular intervals in the circumferential direction.

## Patentansprüche

1. Getriebe (1) für einen Zentrifugal-Abscheider des Dekantiertyps, mit einer Drehtrommel (2) und einem Schneckenförderer (3), der koaxial in der Trommel (2) angeordnet ist, wobei die Trommel (2) und der Schneckenförderer (3) mit unterschiedlichen Drehzahlen durch das Getriebe (1) gedreht werden und das Getriebe (1) umfaßt:
eine erste Getriebeeinheit (10) mit einem ersten Zahnradring (R1), der durch eine Antriebskraft einer Antriebs-Vorrichtung (MM) gedreht wird, die eine Trommel (2) in Drehung versetzt, umfassend ferner ein nicht rotierendes erstes Sonnen-Zahnrad (S1) und ein erstes Planeten-Zahnrad (P1), das mit dem ersten Zahnradring (R1) und mit dem nicht rotierenden ersten Sonnen-Zahnrad (S1) in Eingriff steht;
ferner umfassend eine zweite Getriebeinheit (20) mit einem zweiten Ringzahnrad (R2), das durch die Antriebskraft der ersten Antriebs-Vorrichtung (MM) in Drehung versetzt wird, ein zweites Sonnen-Zahnrad (S2), das sich als Folge der Umdrehung des ersten Planeten-Zahnrades (P1) dreht, und ein zweites Planeten-Zahnrad (P2), das mit dem zweiten Ringzahnrad (R2) und mit dem zweiten Sonnen-Zahnrad (S2) in Eingriff steht, wobei die Umdrehung des zweiten Planeten-Zahnrades (P2) auf den Schneckenförderer (3) übertragen wird;
des weiteren umfassend eine erste a-Getriebeeinheit mit einem ersten a-Sonnen-Zahnrad, das mit der zweiten Antriebs-Vorrichtung (BDM) in Verbindung steht, ein erstes a-Planeten-Zahnrad (P1a), das mit dem ersten a-Sonnen-Zahnrad (S1a) in Eingriff steht und sich zusammen mit der Umdrehung des ersten Planeten-Zahnrads (P1) und um das erste a-Sonnen-Zahnrad (S1a) dreht, und ein erstes a-Ringzahnrad (R1a), das sich infolge der Umdrehung des ersten a-Planeten-Zahnrads (P1a) dreht und mit dem zweiten Sonnen-Zahnrad (S2) verbunden ist, wobei die Umdrehung des ersten Planeten-Zahnrads (P1) auf das zweite Sonnen-Zahnrad (S2) durch das erste a-Ringzahnrad (R1a) übertragen wird;
und schließlich umfassend einen Geschwindigkeits-Wechselträger (C1), der die gekoppelte Umdrehung des ersten Planeten-Zahnrads (P1) und des ersten a-Planeten-Zahnrads (P1a) trägt,
**dadurch gekennzeichnet, daß**
das Getriebe (1) zwischen der Drehtrommel (2) und dem Schneckenförderer (3) eine Differenz-Drehzahl von 0,1 rpm oder weniger bewirkt und daß das Getriebe (1) eine Zentrifugalkraft von 2500 G oder mehr erzeugt, die auf Lager des ersten Planeten-Zahnrads (P1) und des ersten a-Planeten-Zahnrads (P1a) einwirkt,
wobei sowohl das erste Planeten-Zahnrad (P1) als auch das erste a-Planeten-Zahnrad (P1a) ein Zylinder-Rollenlager aufweist, dem eine Drehbewegung ermöglicht wird, und das einen Innenring einen koaxial mit dem Innenring kombinierten Außenring, mehrere Zylinderrollen, die zwischen dem Innenring und dem Außenring angeordnet sind, und einen rollengeführten Käfig aufweist, der aus einem hitzebeständigen Harz hergestellt ist, bestehend aus L-PPS (lineares Polyethylen-Sulfit) oder PEEK (Polyethyl-Ethyl-Keton), das die Zylinderrollen in Umfangsrichtung in regelmäßigen Intervallen hält.

## Revendications

1. - Boite d'engrenages (1) pour un séparateur centrifuge de type décanteur comprenant une cuvette rotative (2) et un transporteur à vis (3) disposé coaxialement dans la cuvette (2), la cuvette (2) et le transporteur à vis (3) étant entraînés en rotation à différentes vitesses par l'intermédiaire de la boite d'engrenages (1), la boite d'engrenages (1) comprenant :
- une première unité d'engrenages (10) comprenant une première couronne (R1) qui est entraînée en rotation par une force d'entraînement d'un premier moyen d'entraînement (MM) entraînait en rotation une cuvette (2), un premier planétaire non rotatif (S1) et un premier satellite (P1) qui est en prise avec la première couronne (R1) et avec le premier planétaire non rotatif (S1);
- une seconde unité d'engrenages (20) comprenant une seconde couronne (R2) qui est entraînée en rotation par la force d'entraînement du premier moyen d'entraînement (MM), un second planétaire (S2) qui tourne sen réponse à une révolution du premier satellite (P1), et un second satellite (P2) qui est en prise avec la seconde couronne (R2) et avec le second planétaire (S2), la révolution du second satellite (P2) étant transmise au transporteur à vis (3);
- une première unité d'engrenages a comprenant un premier planétaire a relié à un second moyen d'entraînement (BDM), un premier satellite a (P1a) qui est en prise avec le premier planétaire a (S1a) et tourne autour du premier planétaire a (S1a) conjointement avec la révolution du premier satellite (P1), et une première couronne a (R1a) qui tourne en réponse à la révolution du premier satellite a (P1a) et est reliée au second planétaire (S2), la révolution du premier satellite (P1) étant transmise au second planétaire (S2) par l'intermédiaire de la première couronne a (R1a) ; et
- un support de changement de vitesse (C1) qui supporte la révolution couplée du premier satellite (P1) et du premier satellite a (P1a),
**caractérisée par le fait que** :
- la boite d'engrenages (1) permet une vitesse de rotation différente de 1,0 tr/min ou moins entre la cuvette rotative (2) et le transporteur à vis (3), et la boite d'engrenages (1) permet une force centrifuge de 2 500 G ou plus agissant sur les roulements du premier satellite (P1) et du premier satellite a (P1a), et
- chacun du premier satellite (P1) et du premier satellite a (P1a) comprenant un roulement à rouleaux cylindriques qui permet leur rotation, le roulement à rouleaux cylindriques comprenant une bague interne, une bague externe combinée coaxialement avec la bague interne, plusieurs rouleaux cylindriques disposés entre la bague interne et la bague externe, et une cage guidée par rouleaux faite d'une résine résistant à la chaleur comprenant du L-PPS (sulfure de polyphényléne linéaire) ou du PEEK (polyéther éther cétone) qui maintient les rouleaux cylindriques à des intervalles réguliers dans la direction circonférentielle.
